# EUROPÄISCHE PATENTANMELDUNG

(11) **EP 4 239 810 A1**
(43) Veröffentlichungstag der Anmeldung: **06.09.2023**
(21) Anmeldenummer: 22159933.5
(22) Anmeldetag: 03.03.2022
(51) Int. Cl.: H01R 13/631, H01R 13/73, B60L 50/64, B62J 43/16, H01M 50/20

(54) **SCHWIMMENDE STECKVERBINDERANORDNUNG UND BATTERIEANORDNUNG**

(71) Anmelder: Rosenberger Hochfrequenztechnik GmbH & Co. KG, 83413 Fridolfing (DE)
(72) Erfinder: Egger, Tobias, 83413 Fridolfing (DE); Hasenöhrl, Ulrich, 83404 Ainring (DE)
(74) Vertreter: Lorenz, Matthias

(57) **Zusammenfassung**

Die Erfindung betrifft eine Steckverbinderanordnung (1), aufweisend einen elektrischen Steckverbinder (2), der entlang eines ersten Translationsfreiheitsgrades (x) mit einem korrespondierenden Gegensteckverbinder (3) elektrisch und mechanisch verbindbar ist. Die Steckverbinderanordnung (1) weist außerdem eine Gehäusekomponente (5) und wenigstens ein elastisches Element (6) auf, das den Steckverbinder (2) mittelbar oder unmittelbar mit der Gehäusekomponente (5) verbindet. Das elastische Element (6) ermöglicht eine Bewegung des Steckverbinders (2) relativ zu der Gehäusekomponente (5) entlang des ersten Translationsfreiheitsgrades (x) und/oder entlang eines zweiten Translationsfreiheitsgrades (y) und/oder entlang eines dritten Translationsfreiheitsgrades (z). Erfindungsgemäß weist die Steckverbinderanordnung wenigstens eine schwimmende Lageranordnung (17) zur Begrenzung der Beweglichkeit des Steckverbinders (2) entlang zumindest einem der Translationsfreiheitsgrade (x, y, z) auf, die eine Lagerausnehmung (18) und eine in der Lagerausnehmung (18) aufnehmbare Lagererhebung (19) umfasst.

## Beschreibung

Die Erfindung betrifft eine Steckverbinderanordnung, aufweisend einen elektrischen Steckverbinder, der entlang eines ersten Translationsfreiheitsgrades mit einem korrespondierenden Gegensteckverbinder elektrisch und mechanisch verbindbar ist, eine Gehäusekomponente und wenigstens ein elastisches Element, gemäß dem Oberbegriff des Anspruchs 1.

Die Erfindung betrifft außerdem eine Batterieanordnung, aufweisend eine Steckverbinderanordnung.

Aus der Elektrotechnik sind diverse elektrische Steckverbinder bekannt. Elektrische Steckverbinder dienen bekanntermaßen dazu, elektrische Versorgungssignale und/oder Datensignale an korrespondierende Gegensteckverbinder zu übertragen. Bei einem Steckverbinder bzw. Gegensteckverbinder kann es sich um einen Stecker, einen Leiterplattenstecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Mitunter ist es erforderlich, einen Steckverbinder "schwimmend" an einem umgebenden Bauteil, wie einer Gehäusekomponente, zu befestigen, so dass der Steckverbinder und damit auch die gesteckte Steckverbindung eine Ausgleichsbewegung in einem Freiheitsgrad oder in mehreren Freiheitsgraden durchführen kann. Eine schwimmende Lagerung ist insbesondere dann vorteilhaft, wenn Steckverbinder und/oder Gegensteckverbinder starr mit einer elektrischen Einrichtung verbunden sind, die im Betrieb zu einem gewissen Grad beweglich ist, da die von der elektrischen Einrichtung (z. B. einer Batterie) auf den Steckverbinder übertragene Bewegung eine Beschädigung der Steckverbindung und/oder einen Kontaktverlust zur Folge haben kann. Ein schwimmend gelagerter Steckverbinder vermag den Bewegungen der elektrischen Einrichtung in definierten Grenzen zu folgen, was die mechanische Belastung reduzieren kann.

Beispielsweise werden Fahrzeugbatterien von Elektrofahrzeugen, insbesondere von elektrisch betriebenen Zweirädern (z. B. E-Scooter und E-Bikes), häufig in einem Batterieaufnahmebehälter gelagert. Die Fahrzeugbatterie ist dabei typischerweise im Batterieaufnahmebehälter befestigt, aufgrund von beispielsweise Bauteiltoleranzen aber mitunter noch in einem gewissen Rahmen entlang zumindest einem Translations- oder Rotationsfreiheitsgrad beweglich, weshalb es insbesondere bei Fahrbahnunebenheiten und Vibrationen zu einer Lageänderung (also zu einer Positions- und/oder Orientierungsänderung) der Fahrzeugbatterie innerhalb des Batterieaufnahmebehälters kommen kann. Da die Fahrzeugbatterie in der Regel über einen am Batteriegehäuse montierten Steckverbinder (nachfolgend der "Gegensteckverbinder") mit einem Steckverbinder im Batterieaufnahmebehälter verbunden ist, wird die Bewegung der Fahrzeugbatterie unmittelbar auf besagte Steckverbindung übertragen, weshalb im Fahrbetrieb mitunter hohe mechanische Kräfte auf die Steckverbindung einwirken können.

Möglichkeiten zur Realisierung einer schwimmenden Befestigung eines Steckverbinders sind im Stand der Technik grundsätzlich bereits bekannt. Beispielhaft sei auf die DE 20 2010 003 651 U1 verwiesen, die einen Steckverbinder mit einem schwimmenden Lager beschreibt.

Bei den bekannten Lösungen wird die Beweglichkeit des Steckverbinders in der Regel über eine Lagerung des Steckverbinders in einer der Anzahl Ausgleichsfreiheitsgrade entsprechenden Anzahl elastischer Elemente realisiert. Der technische Aufwand und damit auch die Kosten für die Bereitstellung einer Steckverbinderanordnung mit einem schwimmend gelagerten Steckverbinder sind bei den bekannten Lösungen vergleichsweise groß.

Es kann sich außerdem ein Zielkonflikt ergeben, wenn sich der Steckverbinder im ungesteckten Grundzustand in einer klar definierten, räumlichen Ausgangslage befinden soll, beispielsweise um ein "blindes" Zusammenstecken mit dem Gegensteckverbinder zu ermöglichen oder zu vereinfachen. Diese Anforderung steht bei den bekannten Lösungen meist im Widerspruch zu der schwimmenden Befestigung.

In Anbetracht des bekannten Stands der Technik besteht die Aufgabe der vorliegenden Erfindung darin, eine Steckverbinderanordnung bereitzustellen, die eine technisch einfach realisierbare, schwimmende Lagerung eines Steckverbinders ermöglicht, insbesondere in Kombination mit einer bekannten räumlichen Ausgangslage im nicht gesteckten Zustand.

Der vorliegenden Erfindung liegt auch die Aufgabe zugrunde, eine Batterieanordnung mit einer Steckverbinderanordnung bereitzustellen, die eine technisch einfach realisierbare, schwimmende Lagerung eines Steckverbinders ermöglicht, insbesondere in Kombination mit einer bekannten räumlichen Ausgangslage im nicht gesteckten Zustand.

Die Aufgabe wird für die Steckverbinderanordnung mit den in Anspruch 1 aufgeführten Merkmalen gelöst. Hinsichtlich der Batterieanordnung wird die Aufgabe durch die Merkmale des Anspruchs 15 gelöst.

Die abhängigen Ansprüche und die nachfolgend beschriebenen Merkmale betreffen vorteilhafte Ausführungsformen und Varianten der Erfindung.

Es ist eine Steckverbinderanordnung vorgesehen, aufweisend einen elektrischen Steckverbinder, der entlang einer Steckrichtung, die nachfolgend auch als "erster Translationsfreiheitsgrad" bezeichnet wird, mit einem korrespondierenden Gegensteckverbinder elektrisch und mechanisch verbindbar ist.

Die erfindungsgemäße Steckverbinderanordnung kann besonders vorteilhaft innerhalb eines Fahrzeugs, insbesondere eines Straßenfahrzeugs, verwendet werden. Mögliche Einsatzgebiete sind insbesondere die E-Mobility (beispielsweise elektrisch betriebene Zweiräder), und ganz besonders elektrische Steckverbinderanordnungen in Batterieaufnahmebehältern für Batterien bzw. Akkumulatoren der Fahrzeuge. Die erfindungsgemäße Steckverbinderanordnung eignet sich grundsätzlich aber für beliebige Anwendungen innerhalb der gesamten Elektrotechnik und ist nicht auf den Einsatz in der Fahrzeugtechnik beschränkt zu verstehen.

Der elektrische Steckverbinder weist vorzugsweise ein Steckverbindergehäuse auf, mit einem dem Gegensteckverbinder zugewandten Verbindungsabschnitt (die "Schnittstelle" bzw. das "Interface") zur Verbindung mit einem korrespondierenden Verbindungsabschnitt des elektrischen Gegensteckverbinders.

Der elektrische Steckverbinder kann ein elektrisches Kontaktelement oder mehrere elektrische Kontaktelemente aufweisen, die mit korrespondierenden Gegenkontaktelementen des Gegensteckverbinders verbindbar sind. Die Kontaktelemente sind vorzugsweise in dem Steckverbindergehäuse aufgenommen und ragen in den Verbindungsabschnitt des Steckverbindergehäuses hinein. Es kann sich bei den Kontaktelementen um Buchsenkontakte, Stiftkontakte oder sonstige Kontaktarten handeln. Auch die Verwendung gefederter Kontakte (z. B. Federkontaktstifte) kann vorgesehen sein.

Erfindungsgemäß weist die Steckverbinderanordnung eine Gehäusekomponente auf, sowie wenigstens ein elastisches Element, das den Steckverbinder (insbesondere das Steckverbindergehäuse des Steckverbinders) mittelbar oder unmittelbar mit der Gehäusekomponente verbindet.

Der Steckverbinder kann insbesondere als Kabelsteckverbinder ausgebildet sein und einen Kabelabgang für ein elektrisches Kabel bzw. eine elektrische Leitung oder für mehrere elektrische Kabel bzw. elektrische Leitungen aufweisen, beispielsweise auf der von dem Verbindungsabschnitt abgewandten Seite, wobei die Kontaktelemente des Steckverbinders mit entsprechenden elektrischen Leitern des elektrischen Kabels verbunden sind (z. B. verpresst). Es kann aber beispielsweise auch vorgesehen sein, dass der Steckverbinder als Leiterplattenstecker ausgebildet ist, wobei die Kontaktelemente des Steckverbinders in diesem Fall vorzugsweise unmittelbar mit Leiterbahnen einer elektrischen Leiterplatte verbunden sind (z. B. verlötet).

Der Steckverbinder kann als ungewinkelter, gerader Steckverbinder oder als Winkelsteckverbinder ausgebildet sein. Hierauf kommt es im Rahmen der Erfindung nicht unbedingt an.

Bei der Gehäusekomponente handelt es sich vorzugsweise nicht um das Steckverbindergehäuse bzw. nicht um ein Gehäuseteil des Steckverbinders. Die Gehäusekomponente ist vorzugsweise aus einem Kunststoff ausgebildet, kann aber grundsätzlich aus einem beliebigen Material ausgebildet sein, beispielsweise auch aus einem Metall.

Erfindungsgemäß ist das elastische Element ausgebildet und angeordnet, um eine Bewegung des Steckverbinders relativ zu der Gehäusekomponente entlang des ersten Translationsfreiheitsgrades und/oder entlang eines zweiten Translationsfreiheitsgrades und/oder entlang eines dritten Translationsfreiheitsgrades zu ermöglichen bzw. zu unterstützen.

Die drei Translationsfreiheitsgrade sind jeweils orthogonal zueinander ausgerichtet.

Aufgrund der mechanischen Unterstützung durch das elastische Element kann die Bewegung zwischen Steckverbinder und Gehäusekomponente einerseits geführt und außerdem gezielt gedämpft werden. Beispielsweise können Vibrationen abgeschwächt oder vollständig absorbiert werden.

Das elastische Element greift vorzugsweise mittelbar oder unmittelbar an der von dem Gegensteckverbinder abgewandten Seite des Steckverbinders bzw. Steckverbindergehäuses an.

Das elastische Element ist vorzugsweise aus einem Metall ausgebildet (insbesondere aus einem Metalldraht), kann aber grundsätzlich aus einem beliebigen Material ausgebildet sein, beispielsweise auch aus einem Kunststoff (insbesondere aus einem Elastomer).

Erfindungsgemäß weist die Steckverbinderanordnung wenigstens eine schwimmende Lageranordnung auf, die ausgebildet und angeordnet ist, die Beweglichkeit des Steckverbinders entlang zumindest einem der Translationsfreiheitsgrade zu begrenzen. Die Lageranordnung weist hierzu eine Lagerausnehmung und eine in der Lagerausnehmung aufnehmbare Lagererhebung auf.

Es kann somit eine Bewegungsbegrenzung bzw. Grobführung und/oder Lagerung zwischen Steckverbinder und Gehäusekomponente bereitgestellt werden. Der Steckverbinder, die Gehäusekomponente und/oder das elastische Element können in vorgegebenen Begrenzungen geführt sein, wobei innerhalb der definierten Begrenzungen eine Ausgleichsbewegung möglich ist.

An dieser Stelle sei erwähnt, dass der Steckverbinder bzw. das elastische Element auch in einem Freiheitsgrad oder in mehreren Freiheitsgraden exakt geführt sein kann, so dass in diesen Freiheitsgraden keine Ausgleichsbewegung möglich ist.

Die Bewegungsfreiheit entlang der jeweiligen Translationsfreiheitsgrade kann beispielsweise bis zu 10 mm oder mehr betragen, insbesondere etwa 5 mm, 2,5 mm, 2 mm oder 1,5 mm.

Gemäß einer Weiterbildung der Erfindung ist das elastische Element derart zwischen dem Steckverbinder und der Gehäusekomponente angeordnet, dass ein primärer elastischer Arbeitsweg des elastischen Elements im Wesentlichen (vorzugsweise exakt) entlang der Steckrichtung bzw. entlang des ersten Translationsfreiheitsgrades verläuft.

Bei dem primären elastischen Arbeitsweg (nachfolgend vereinfachen mitunter auch nur als "elastischer Arbeitsweg" oder "primärer Arbeitsweg" bezeichnet) handelt es sich insbesondere um die vorgesehene Betätigungsrichtung des elastischen Elements, entlang der die Elastizität des elastischen Elements ihre vornehmliche, primäre Wirkung entfaltet - im Falle einer Feder beispielsweise der so genannte Federweg. Es sei betont, dass ein elastisches Element häufig auch zu einem gewissen Grad entlang weiterer Richtungen bzw. Freiheitsgrade beweglich sein bzw. elastisch wirken kann. Eine Feder ist beispielsweise in der Regel quer zu dem Federweg verkippbar und vermag sich anschließend wieder von selbst aufzurichten. Diese Freiheitsgrade, die nicht der vorgesehenen Hauptwirkrichtung des elastischen Elements entsprechen, sind nicht als "primärer elastischer Arbeitsweg" im Sinne dieser Beschreibung zu verstehen.

Es kann genau ein elastisches Element vorgesehen sein. Grundsätzlich können aber auch mehrere elastische Elemente vorgesehen sein (beispielsweise zwei, drei, vier oder noch mehr elastische Elemente), vorzugsweise in paralleler Anordnung bzw. paralleler Ausrichtung des jeweiligen primären elastischen Arbeitsweges (nebeneinander und/oder hintereinander).

Insofern mehrere elastische Elemente vorgesehen sind, sind vorzugsweise alle an der mechanischen Verbindung zwischen dem Steckverbinder und der Gehäusekomponente funktional (in irgendeiner Weise) beteiligten elastischen Elemente so angeordnet, dass deren jeweiliger primärer elastischer Arbeitsweg im Wesentlichen (vorzugsweise exakt) entlang der Steckrichtung bzw. entlang des ersten Translationsfreiheitsgrades verläuft. Vorzugsweise sind keine elastischen Elemente vorgesehen, deren jeweilige primären elastischen Arbeitswege quer bzw. orthogonal zueinander ausgerichtet sind.

Vorzugsweise ist das elastische Element ausgebildet und angeordnet, eine Druckkraft auf den Steckverbinder in Richtung auf den Gegensteckverbinder zu bewirken. Genauso kann es aber auch vorgesehen sein, dass das elastische Element ausgebildet und angeordnet ist, eine Zugkraft auf den Steckverbinder in Richtung auf den Gegensteckverbinder zu bewirken. Auch Kombinationen aus drückenden und ziehenden elastischen Elementen sind möglich. Die Erfindung wird zum einfacheren Verständnis nachfolgend im Wesentlichen durch eine Druckfeder bzw. ein drückendes elastisches Element beschrieben. Dies ist aber nicht einschränkend zu verstehen.

In einer Weiterbildung der Erfindung kann vorgesehen sein, dass das elastische Element entlang des zweiten Translationsfreiheitsgrades und/oder entlang des dritten Translationsfreiheitsgrades beweglich ist. Vorzugsweise sind alle an der mechanischen Verbindung zwischen dem Steckverbinder und der Gehäusekomponente (in irgendeiner Weise) beteiligten elastischen Elemente entlang des zweiten Translationsfreiheitsgrades und/oder entlang des dritten Translationsfreiheitsgrades beweglich.

Die vorgeschlagene Steckverbinderanordnung kann einen Toleranzausgleich in mehreren Raumrichtungen ermöglichen, vorzugsweise in allen Translationsfreiheitsgraden und/oder in allen Rotationsfreiheitsgraden.

Gemäß einer Weiterbildung der Erfindung kann vorgesehen sein, dass die wenigstens eine Lagerausnehmung in der Gehäusekomponente ausgebildet ist. In diesem Fall ist die Lagererhebung vorzugsweise starr mit dem Steckverbinder verbunden - unmittelbar oder mittelbar (z. B. über das nachfolgend noch erwähnte Verlängerungselement).

Bei der Lagerausnehmung kann es sich insbesondere um ein entlang des ersten Translationsfreiheitsgrades ausgerichtetes Langloch handeln (die längere Querschnittserstreckung des Langlochs verläuft somit entlang des ersten Translationsfreiheitsgrades bzw. in Steckrichtung), gegebenenfalls kann aber auch eine herkömmliche Bohrung oder eine sonstige Ausnehmung vorgesehen sein. Die Lagerausnehmung ist vorzugsweise durchgängig, kann gegebenenfalls aber auch als Sackloch ausgeführt sein.

Bei der Lagerausnehmung kann es sich außerdem auch um eine sich verjüngende Ausnehmung handeln (z. B. eine konische oder pyramidenförmige Lagerausnehmung), insbesondere eine sich verjüngende Ausnehmung, deren Spitze in Richtung des Gegensteckverbinders ausgerichtet ist. Die sich verjüngende Ausnehmung verjüngt sich somit vorzugsweise entlang des ersten Translationsfreiheitsgrades (gegebenenfalls aber auch quer zu dem ersten Translationsfreiheitsgrad, beispielsweise entlang des zweiten oder dritten Translationsfreiheitsgrades). Die sich verjüngende Lagerausnehmung kann insbesondere an oder in einer zumindest im Wesentlichen orthogonal zu dem ersten Translationsfreiheitsgrad ausgerichteten Fläche der Gehäusekomponente ausgebildet sein.

In einer Ausgestaltung der Erfindung kann insbesondere vorgesehen sein, dass sich die Lagererhebung einteilig aus dem Steckverbindergehäuse und/oder aus dem Verlängerungselement erhebt oder als separate Komponente auf dem Steckverbindergehäuse und/oder auf dem Verlängerungselement befestigt ist.

Die Lagererhebung kann in der Lagerausnehmung aufgenommen und daher in der Lagerausnehmung gelagert und/oder geführt sein.

Bei der Lagererhebung kann es sich insbesondere um einen Führungsstift, einen Führungsbolzen oder einen Führungssteg handeln.

Bei der Lagererhebung kann es sich außerdem auch um eine sich verjüngende Erhebung handeln (z. B. eine konische oder pyramidenförmige Lagererhebung), insbesondere eine sich verjüngende Erhebung, deren Spitze in Richtung des Gegensteckverbinders ausgerichtet ist. Die sich verjüngende Erhebung verjüngt sich somit vorzugsweise entlang des ersten Translationsfreiheitsgrades (gegebenenfalls aber auch quer zu dem ersten Translationsfreiheitsgrad, beispielsweise entlang des zweiten oder dritten Translationsfreiheitsgrades). Die sich verjüngende Lagererhebung kann insbesondere an in einer zumindest im Wesentlichen orthogonal zu dem ersten Translationsfreiheitsgrad ausgerichteten Fläche des Steckverbinders und/oder des Verlängerungselements ausgebildet sein.

Insbesondere die beiden Kombinationen aus verjüngender Erhebung und verjüngender Ausnehmung sowie Bolzen und Langloch zur Ausbildung einer der schwimmenden Lageranordnung haben sich als besonders geeignet herausgestellt.

Es können auch mehrere Lageranordnungen vorgesehen sein (beispielsweise zwei, drei, vier oder noch mehr Lageranordnungen), insbesondere nebeneinander oder hintereinander (vorzugsweise in paralleler Ausrichtung), bezogen auf den ersten Translationsfreiheitsgrad bzw. die Steckrichtung. Wenn mehrere Lageranordnungen verwendet werden, kann auch vorgesehen sein, dass eine erste Lageranordnung auf einer ersten Seite der Gehäusekomponente und eine zweite Lageranordnung auf einer winklig (z. B. orthogonal) zu der ersten Seite der Gehäusekomponente ausgerichteten, zweiten Seite der Gehäusekomponente angeordnet ist. Auf diese Weise kann eine schwimmende Eck-Positionierung des Steckverbinders ermöglicht werden.

Auch Mischungen verschiedener Varianten von Lageranordnungen können vorgesehen sein (z. B. eine erste Lageranordnung aus einem Bolzen und einem Langloch und eine zweite Lageranordnung aus einer verjüngenden Erhebung und einer verjüngenden Ausnehmung).

Die Lagererhebung weist vorzugsweise ein rundes Querschnittsprofil auf. Es können aber beliebige Querschnittsprofile vorgesehen sein, beispielsweise auch eckige Profile, elliptische oder sonstige polygonale Querschnittsprofile. Die Querschnittsgeometrie der Lagerausnehmung kann entsprechend an die Lagererhebung angepasst sein, soweit erforderlich.

In einer Weiterbildung der Erfindung kann vorgesehen sein, dass eine erste Querschnittserstreckung der Lagerausnehmung entlang des ersten Translationsfreiheitsgrades größer ist als eine entsprechende erste Querschnittserstreckung der Lagererhebung. Alternativ oder ergänzend kann vorgesehen sein, dass eine zweite Querschnittserstreckung der Lagerausnehmung entlang des zweiten Translationsfreiheitsgrades größer ist als eine entsprechende zweite Querschnittserstreckung der Lagererhebung.

Es kann beispielsweise vorgesehen sein, dass die Lagerausnehmung gegenüber der Lagererhebung ein definiertes mechanisches Spiel bzw. einen definierten Bewegungsfreiraum in Richtung des ersten Translationsfreiheitsgrades und/oder entlang des zweiten Translationsfreiheitsgrades und/oder entlang des dritten Translationsfreiheitsgrades aufweist.

Wie vorstehend bereits erwähnt, hat sich insbesondere die Kombination eines Langlochs und eines Führungsbolzens als besonders geeignet herausgestellt. Auf diese Weise kann sich mit einfachen konstruktiven Mittel eine Lagerung mit mechanischem Spiel entlang des ersten Translationsfreiheitsgrades ergeben, wenn das Langloch längs (also mit seiner größeren Querschnittserstreckung) entlang des ersten Translationsfreiheitsgrades ausgerichtet ist. Indem das Langloch außerdem breiter ausgebildet ist als der Führungsbolzen (oder eine sonstige Lagererhebung), kann optional auch noch ein mechanisches Spiel in einem zu dem ersten Translationsfreiheitsgrad orthogonalen Translationsfreiheitsgrad möglich sein.

Auf ähnliche Weise lässt sich auch eine Lagerung bzw. Grobführung mit einer übergroßen, herkömmlichen Bohrung oder einer anders gearteten Lagerausnehmung realisieren.

Wie bereits erwähnt, kann in zumindest einem Freiheitsgrad auch eine spielfreie Führung vorgesehen sein, also beispielsweise indem die Breite des Langlochs annähernd oder exakt dem Durchmesser des Führungsbolzens entspricht, so dass der Führungsbolzen nur längs entlang des Langlochs bewegbar ist (und gegebenenfalls in die Tiefe).

In einer Weiterbildung der Erfindung kann vorgesehen sein, dass sich die Lagererhebung vollständig durch die Lagerausnehmung erstreckt. Vorzugsweise ist die Lagererhebung in diesem Fall auf der austretenden Seite durch wenigstens ein Befestigungselement verliersicher gehalten, insbesondere mit der Gehäusekomponente verliersicher verbunden.

Bei dem Befestigungselement kann es sich beispielsweise um ein Schraubenelement handeln, insbesondere um eine Flanschschraube. Das Schraubenelement kann mit seinem Schaft in der Lagererhebung verschraubt sein und sich mit dem Schraubenkopf und/oder einer Unterlegscheibe auf der Gehäusekomponente abstützen. Bei dem Befestigungselement kann es sich allerdings auch um eine Schraubenmutter bzw. um ein Befestigungselement mit einem Innengewinde handeln. Die Schraubenmutter kann dann auf der Lagererhebung verschraubt sein und sich unmittelbar oder über eine Unterlegscheibe auf der Gehäusekomponente abstützen. Grundsätzlich kann ein beliebiges Befestigungselement vorgesehen sein.

Insbesondere wenn mehrere Befestigungselemente vorgesehen sind, kann die Steckverbinderanordnung optional eine Befestigungsplatte aufweisen, mit der zumindest zwei der Befestigungselemente verbunden sind. Vorzugsweise weist die Befestigungsplatte eine der Anzahl Befestigungselemente korrespondierende Anzahl Bohrungen oder sonstige Ausnehmungen auf, die koaxial bzw. fluchtend zu den jeweiligen Lagerausnehmungen angeordnet sind, so dass die Befestigungselemente (oder die Lagererhebungen) einerseits durch die Gehäusekomponente und andererseits auch durch die Befestigungsplatte hindurch verlaufen.

Es kann vorgesehen sein, die Steckverbinderanordnung mittels der Befestigungselemente und/oder der Befestigungsplatte mit einem umgebenden, separaten Bauteil zu verbinden, wie einer Wandung eines Gehäuseteils (z. B. eine Wandung eines Batterieaufnahmebehälters). Vorzugsweise kann die Lagerausnehmung in diesem Fall auch in der Wandung des Gehäuseteils ausgebildet sein oder kann sich die Lagererhebung aus diesem Gehäuseteil erheben.

In einer Ausgestaltung der Erfindung kann vorgesehen sein, dass die Höhe bzw. axiale Länge der Lagererhebung (also z. B. die axiale Länge eines Führungsbolzens) größer ist als die Tiefe der Lagerausnehmung, um eine Ausgleichsbewegung des elastischen Elements entlang des dritten Translationsfreiheitsgrades (also z. B. entlang der Längserstreckung des Führungsbolzens) zu ermöglichen, bei gleichzeitig verliersicherer Befestigung.

In einer Weiterbildung der Erfindung kann vorgesehen sein, dass die Steckverbinderanordnung ein mit dem Steckverbinder verbundenes Verlängerungselement aufweist, insbesondere ein starr und unmittelbar mit dem Steckverbinder (vor allem dem Steckverbindergehäuse) verbundenes Verlängerungselement. Das Verlängerungselement kann somit an dem Steckverbinder, insbesondere an dem Steckverbindergehäuse des Steckverbinders, befestigt sein.

Auf diese Weise kann eine mechanische Führung bei der Bewegung des Steckverbinders und/oder des elastischen Elements entlang zumindest eines Translationsfreiheitsgrades bereitgestellt werden. Das Verlängerungselement kann in der Art eines Führungsschlittens auf der Gehäusekomponente geführt werden. Insbesondere wird durch das Verlängerungselement allerdings eine beliebige Verlängerung oder Umlenkung des Wirkbereichs des elastischen Elements möglich, was die Flexibilität hinsichtlich des Konstruktionsspielraums für die Steckverbinderanordnung erhöht. Somit können bereits kleine Schwenkbewegungen an dem von dem steckverbinderseitigen Ende des Verlängerungselements abgewandten Ende des Verlängerungselements in eine große Translationsbewegung an dem steckverbinderseitigen Ende des Verlängerungselements übertragen werden.

Ein Verlängerungselement ist allerdings nicht unbedingt erforderlich, insbesondere auch nicht zur Ausbildung der Lageranordnungen. Beispielsweise können die Führungserhebungen auch unmittelbar in dem Steckverbinder ausgebildet sein, wie vorstehend bereits erwähnt.

Das wenigstens eine elastische Element ist vorzugsweise mittelbar oder unmittelbar (insbesondere starr und unmittelbar) mit dem Verlängerungselement verbunden. Hierzu kann ein steckerseitiges Ende oder ein steckerseitiger Endabschnitt des elastischen Elements an dem von dem Steckverbinder abgewandten Ende oder Endabschnitt des Verlängerungselements befestigt sein.

In einer vorteilhaften Weiterbildung der Erfindung kann vorgesehen sein, dass ein gehäuseseitiges Ende oder ein gehäuseseitiger Endabschnitt des elastischen Elements an der Gehäusekomponente befestigt ist.

Das elastische Element ist vorzugsweise an einer Stützfläche der Gehäusekomponente befestigt, die in Richtung des Steckverbinders ausgerichtet ist.

Die Gehäusekomponente ist vorzugsweise winklig ausgebildet und weist einen Stützabschnitt auf, vorzugsweise mit der vorstehend genannten Stützfläche, an dem das von dem Steckverbinder abgewandte Ende bzw. der von dem Steckverbinder abgewandte Endabschnitt des elastischen Elements befestigt oder zumindest abgestützt ist, sowie einen Führungsabschnitt zur Führung des Steckverbinders, des Verlängerungselements und/oder des elastischen Elements. Der Stützabschnitt ist winklig zu dem Führungsabschnitt angeordnet, vorzugsweise orthogonal. Der Stützabschnitt und der Führungsabschnitt können einteilig, gegebenenfalls aber auch mehrteilig ausgebildet sein. Eine Flächennormale des Stützabschnitts, insbesondere der Stützfläche, verläuft vorzugsweise parallel zu dem ersten Translationsfreiheitsgrad. Der Führungsabschnitt verläuft vorzugsweise parallel zu dem ersten Translationsfreiheitsgrad bzw. zu dem Verlauf des elastischen Elements.

Vorzugsweise beaufschlagt das elastische Element den Steckverbinder mit einer entlang des ersten Translationsfreiheitsgrades bzw. in Richtung des Gegensteckverbinders wirkenden Kraftkomponente, so dass der Steckverbinder im nicht gesteckten Zustand die "vorderste" mögliche Position annimmt.

Gemäß einer Weiterbildung der Erfindung kann vorgesehen sein, dass das elastische Element als Feder ausgebildet ist, vorzugsweise als Torsionsfeder.

Bei dem elastischen Element kann es sich auch um eine Blattfeder handeln. Grundsätzlich kann aber ein beliebiges elastisches Element vorgesehen sein, beispielsweise auch ein Elastomer.

In einer Weiterbildung der Erfindung kann vorgesehen sein, dass die Steckverbinderanordnung wenigstens ein Drehzentrum aufweist, um das der Steckverbinder (insbesondere gemeinsam mit dem Verlängerungselement und/oder gemeinsam mit dem elastischen Element) verkippbar ist, um die Bewegung entlang des zweiten Translationsfreiheitsgrades und/oder entlang des dritten Translationsfreiheitsgrades zu ermöglichen.

Es hat sich gezeigt, dass sich eine Ausgleichsbewegung des Steckverbinders entlang des zweiten oder dritten Translationsfreiheitsgrades oder entlang beider besagter Translationsfreiheitsgrade besonders vorteilhaft durch eine Kippbewegung erreichen lässt.

An dieser Stelle sei erwähnt, dass es, insofern vorliegend von einer Translationsbewegung oder Kippbewegung (z. B. entlang einer der Translationsfreiheitsgrade oder der Steckrichtung) gesprochen wird, nicht auf die konkrete Raumrichtung (das "Vorzeichen" der Bewegung bzw. des Bewegungsvektors) entlang besagter Richtungen / Wege ankommt. Eine Bewegung kann jeweils immer in beide Raumrichtungen erfolgen.

Das Drehzentrum ist vorzugsweise möglichst weit von dem Steckverbinder entfernt angeordnet (beispielsweise angrenzend oder zumindest benachbart an das von dem Steckverbinder abgewandte Ende des Verlängerungselements), um eine möglichst große Hebelwirkung und damit auch eine große Translation durch das Verkippen zu ermöglichen. Das Drehzentrum kann auch im Bereich eines der beiden Enden des eleatischen Elements vorgesehen sein (insbesondere im Bereich des von dem Steckverbinder abgewandten Endes des elastischen Elements) - dies ist allerdings nicht unbedingt erforderlich.

In einer vorteilhaften Weiterbildung der Erfindung kann vorgesehen sein, dass das Drehzentrum durch eine der Lageranordnungen gebildet ist. Insofern mehrere Lageranordnungen vorgesehen sind, wird das Drehzentrum vorzugsweise durch eine Lageranordnung gebildet, die dem Stützabschnitt der Gehäusekomponente am nächsten ist.

Je nach Ausgestaltung der als Drehzentrum verwendeten Lageranordnung kann ein einachsiges Drehzentrum, ein zweiachsiges Drehzentrum oder ein dreiachsiges Drehzentrum vorgesehen sein. Ein einachsiges Drehzentrum kann beispielsweise durch eine Bohrung mit passgenau hindurchgeführtem Führungsbolzen bereitgestellt werden, so dass der Führungsbolzen lediglich um seine Längsachse rotieren kann. Ein zweiachsiges Drehzentrum kann beispielsweise durch ein Langloch mit einem hinsichtlich des Querschnitts passgenau hindurchgeführten Führungsbolzen bereitgestellt werden, so dass der Führungsbolzen in Richtung der längeren Quererstreckung des Langlochs verkippen und in dem Langloch um seine Längsachse rotieren kann. Ein dreiachsiges Drehzentrum kann beispielsweise durch ein Langloch mit übergroßem Querschnitt gegenüber einem durch das Langloch hindurchgeführten Führungsbolzen bereitgestellt werden, so dass der Führungsbolzen in beiden Quererstreckungen in dem Langloch verkippen und in dem Langloch um seine Längsachse rotieren kann.

An dieser Stelle sei erwähnt, dass ein Drehzentrum zwar vorteilhaft, jedoch nicht unbedingt erforderlich ist, um eine Bewegung des Steckverbinders entlang einem Translationsfreiheitsgrad zu ermöglichen. Eine Übersetzung einer Kippbewegung an einem Ende (z. B. des Verlängerungselements) in eine Translationsbewegung an einem anderen Ende (z. B. des Verlängerungselements) ist nicht zwingend notwendig, denn es kann beispielsweise auch eine reine Translationsbewegung (an beiden Enden) vorgesehen sein.

In einer Weiterbildung der Erfindung kann vorgesehen sein, dass das elastische Element eine elastische Rückstellkraft (insbesondere Federkraft) auf den Steckverbinder aufbringt, um den Steckverbinder in einem ungesteckten Zustand in eine definierte räumliche Ausgangslage zu verbringen.

Auf diese Weise ist es möglich, die elastische Kraft (beispielsweise Federkraft) des elastischen Elements einerseits zu nutzen, um die Ausgleichsbewegungen zu führen und zu stabilisieren, und andererseits, um den Steckverbinder in eine definierte "Parkposition" zu verbringen, so dass ein Steckvorgang mit dem Gegensteckverbinder vereinfacht wird. Insbesondere kann auf diese Weise ein "blinder" Steckvorgang ermöglicht oder zumindest unterstützt werden, so dass ein optionaler Fangbereich bzw. Fangtrichter des Steckverbinders und/oder Gegensteckverbinders verkleinert sein kann.

Auf die vorgeschlagene Weise kann also eine selbstständige Positionierung eines im gesteckten Zustand schwimmend gelagerten Steckverbinders ermöglicht werden.

In einer vorteilhaften Weiterbildung der Erfindung kann vorgesehen sein, dass die Steckverbinderanordnung wenigstens eine erste Positionieranordnung aufweist, um den Steckverbinder in seinem nicht gesteckten Zustand in eine definierte, bekannte Ausgangslage (Position und/oder Orientierung) zu verbringen.

Die erste Positionieranordnung kann vorzugsweise als Teil zumindest einer der Lageranordnungen ausgebildet sein. Beispielsweise kann zumindest eine der Lagerausnehmungen an dem vorderen, dem Steckverbinder zugewandten Ende einen querschnittsverringerten Abschnitt aufweisen. Insbesondere kann vorgesehen sein, dass sich der Querschnitt der Lagerausnehmung (z. B. eines Langlochs) in Richtung auf dieses vordere Ende verringert, vorzugsweise kontinuierlich verringert. Auf diese Weise kann die Lagererhebung (z. B. ein Führungsbolzen) aufgrund der elastischen Rückstellkraft in den querschnittsverringerten Abschnitt gedrückt und auf diese Weise positioniert und/oder zentriert werden.

Bei der ersten Positionieranordnung kann es sich grundsätzlich aber auch um eine von der Lageranordnung separate Anordnung handeln, die einerseits eine Positionieraufnahme oder Positionierführung und andererseits eine korrespondierende Positioniererhebung aufweist.

Für die vorgeschlagene Positionierung eignet sich insbesondere eine Kombination aus einer Positioniererhebung oder Lagererhebung mit vornehmlich rundem Querschnitt und einer entsprechenden Positionieraufnahme oder Lagerausnehmung mit ebenfalls vornehmlich rundem Querschnitt, zumindest in dem querschnittsverringerten Abschnitt. Grundsätzlich sind allerdings auch andere Geometrien möglich.

In einer vorteilhaften Weiterbildung der Erfindung kann vorgesehen sein, dass der Steckverbinder und die Gehäusekomponente eine zweite Positionieranordnung aus einem ersten Stützelement einerseits und einem zweiten Stützelement für das erste Stützelement andererseits ausbilden, wobei das zweite Stützelement aufgrund der auf den Steckverbinder wirkenden elastischen Rückstellkraft entlang des ersten Translationsfreiheitsgrades relativ zu dem ersten Stützelement verschoben wird - oder umgekehrt, um eine definierte Abstützposition des Steckverbinders gegenüber der Gehäusekomponente zu erreichen.

Vorzugsweise weisen das erste Stützelement und/oder das zweite Stützelement einen rampenförmigen Abschnitt auf, um das Verschieben in die Abstützposition zu erleichtern.

Das erste Stützelement kann beispielsweise als Erhebung (z. B. als Führungssteg) auf einer der Gehäusekomponente zugewandten Seite des Verlängerungselements angeordnet sein (einteilig oder als separates Bauteil), wobei das zweite Stützelement auf dem Führungsabschnitt angeordnet sein kann (einteilig oder als separates Bauteil) - oder umgekehrt. Das zweite Stützelement kann insbesondere als Stützfläche ausgebildet sein.

Es können mehrere zweite Positionieranordnungen vorgesehen sein (nebeneinander oder hintereinander), beispielsweise zwei, drei, vier, fünf oder noch mehr zweite Positionieranordnungen.

Insbesondere die nachfolgend genannten Kombinationen aus Lageranordnungen, Drehzentren und ersten Positionieranordnungen können vorteilhaft sein, ganz besonders (aber nicht ausschließlich) in jeweiliger Kombination mit einem Verlängerungselement, einer Befestigungsplatte und zwei parallel zueinander angeordneten, zweiten Positionieranordnung, wobei die nachfolgenden Lageranordnungen bevorzugt als Langloch-Führungsbolzen-Kombinationen ausgebildet sind, mit Ausrichtung der Langlöcher mit ihrer längeren Quererstreckung entlang des ersten Translationsfreiheitsgrades:
- genau zwei entlang des ersten Translationsfreiheitsgrades hintereinander angeordnete Lageranordnungen, wobei eine vordere, dem Steckverbinder angenäherte, erste Lageranordnung gleichzeitig eine erste Positionieranordnung mit einem steckerseitigen, konischen Ende des Langlochs ausbildet, wobei die erste Lageranordnung einen Bewegungsspielraum für den Führungsbolzen entlang der kleineren Quererstreckung des Langlochs bereitstellt, und wobei eine hintere, von dem Steckverbinder weiter beabstandete, zweite Lageranordnung eine passgenaue Führung des Führungsbolzens in der kleineren Quererstreckung des Langlochs ausbildet;
- eine einzige Lageranordnung, die möglichst an den Steckverbinder angenähert ist und gleichzeitig eine erste Positionieranordnung mit einem steckerseitigen, konischen Ende des Langlochs ausbildet, wobei besagte Lageranordnung einen Bewegungsspielraum für den Führungsbolzen entlang der kleineren Quererstreckung des Langlochs bereitstellt;
- genau zwei entlang des ersten Translationsfreiheitsgrades hintereinander angeordnete Lageranordnungen, wobei beide Lageranordnungen gleichzeitig eine erste Positionieranordnung mit einem steckerseitigen, konischen Ende des Langlochs ausbilden, und wobei die Lageranordnungen jeweils einen Bewegungsspielraum für den Führungsbolzen entlang der kleineren Quererstreckung des Langlochs bereitstellen;
- genau zwei Lageranordnungen, die an verschiedenen Seiten der Gehäusekomponente angeordnet sind, um eine Eckverbindung bereitzustellen, und die jeweils gleichzeitig eine erste Positionieranordnung mit einem steckerseitigen, konischen Ende des Langlochs ausbilden, und jeweils einen Bewegungsspielraum für den Führungsbolzen entlang der kleineren Quererstreckung des Langlochs bereitstellen;
- genau zwei parallel zu dem ersten Translationsfreiheitsgrad nebeneinander, jedoch voneinander beabstandet angeordnete Lageranordnungen und eine weitere, entlang des ersten Translationsfreiheitsgrades bzw. in Steckrichtung hinter den beiden vorderen Lageranordnungen positionierte Lageranordnung, vorzugsweise mittig zwischen den beiden vorderen Lageranordnungen, wobei alle Lageranordnungen gleichzeitig eine erste Positionieranordnung mit einem steckerseitigen, konischen Ende des Langlochs ausbilden, und wobei alle Lageranordnungen jeweils einen Bewegungsspielraum für den Führungsbolzen entlang der kleineren Quererstreckung des Langlochs bereitstellen.

In einer vorteilhaften Weiterbildung der Erfindung kann vorgesehen sein, dass die Gehäusekomponente ein Wandungsteil eines Batterieaufnahmebehälters ist oder dass die Gehäusekomponente an einem Wandungsteil eines Batterieaufnahmebehälters befestigbar ist.

Der Steckverbinder kann somit an dem Wandungsteil des Batterieaufnahmebehälters schwimmend befestigt sein. Grundsätzlich eignet sich die Erfindung allerdings für beliebige Anwendungen zur schwimmenden Befestigung eines Steckverbinders.

Die Erfindung betrifft auch eine Batterieanordnung, aufweisend eine Steckverbinderanordnung gemäß den vorstehenden und nachfolgenden Ausführungen und einen elektrischen Energiespeicher mit dem Gegensteckverbinder.

Bei dem elektrischen Energiespeicher kann es sich insbesondere um eine elektrische Batterie handeln, d. h. sowohl um eine nicht wiederaufladbare Batterie als auch um eine wiederaufladbare Batterie ("Akkumulator"). Die Batterie kann gegebenenfalls nur eine einzige Batteriezelle oder Akkumulatorzelle aufweisen, vorzugsweise umfasst die Batterie allerdings mehrere Batterie- oder Akkumulatorzellen, die in einer Parallel- und/oder Reihenschaltung miteinander verbunden sind und vorzugsweise eine gemeinsame Ausgangsspannung liefern. Bei dem elektrischen Energiespeicher kann es sich aber grundsätzlich um einen beliebigen Energiespeicher für elektrische Energie handeln - und somit auch um einen Energiespeicher der nicht oder nicht ausschließlich elektrochemisch aufgebaut ist, also zum Beispiel um einen Kondensator.

In diesem Sinne sind die Bezeichnungen "Batterieanordnung" und "Batterieaufnahmebehälter" nicht einschränkend auf die konkrete Verwendung mit einer Batterie zu verstehen.

Die Batterieanordnung kann vorzugsweise Teil eines Fahrzeugs sein. Somit können insbesondere Fahrzeugbatterien eines Elektrofahrzeugs in dessen Batterieaufnahmebehälter gelagert werden.

Es können auch mehrere Batterien vorgesehen sein, die in einem gemeinsamen Batterieaufnahmebehälter aufgenommen sind. Entsprechend können auch mehrere Steckverbinderanordnungen, insbesondere eine Steckverbinderanordnung pro Batterie, vorgesehen sein.

Bei dem Gegensteckverbinder kann es sich um einen Steckverbinder des Energiespeichers handeln, insbesondere um elektrische Energie aus dem Energiespeicher zu entnehmen, dem Energiespeicher elektrische Energie zuzuführen und/oder um eine Datenverbindung mit dem Energiespeicher zu etablieren (beispielsweise eine Kommunikationsverbindung mit einem Batterie-Management-System). Bei dem Gegensteckverbinder kann es sich beispielsweise um eine so genannte Stiftwanne handeln (d. h. eine Buchse mit genau einem Kontaktstift oder mehreren parallel zueinander angeordneten Kontaktstiften), die an einem Außengehäuse des Energiespeichers befestigt ist. Bei dem Steckverbinder kann es sich dann insbesondere um einen korrespondierenden Kuppler handeln, um den Energiespeicher mit einem Daten- und/oder Versorgungskabel des Fahrzeugs zu verbinden, beispielsweise um eine Antriebseinheit mit elektrischer Energie zu versorgen.

Mittels der Steckverbinderanordnung können mechanische Belastungen auf die Steckverbindung in geschlossenem Zustand reduziert werden, auch wenn der Energiespeicher in dem Batterieaufnahmebehälter nicht oder zumindest nicht vollumfassend befestigt ist. Durch die vorgeschlagene Steckverbinderanordnung ist es dem Stecksystem möglich, sich im eingesteckten Zustand samt Energiespeicher in dem Batterieaufnahmebehälter ausgleichend zu bewegen, selbst wenn während des Betriebs (z. B. während der Fahrt eines Fahrzeugs) mechanische Kräfte auftreten (z. B. durch Schlaglöcher, Kurvenfahrten oder Vibrationen).

Auf die vorgeschlagene Weise kann eine technisch einfache, kostengünstige und äußerst robuste Ausgestaltung einer "schwimmenden" Befestigung der Steckverbindung bereitgestellt werden. Dies wird bereits mit geringem Aufwand, insbesondere mit nur wenigen elastischen Elementen, vorzugsweise mit nur einem einzigen elastischen Element, bei gleichzeitig einfacher Montage, möglich.

Die Erfindung eignet sich daher besonders, wenn der Energiespeicher in dem Batterieaufnahmebehälter in zumindest einem Freiheitsgrad beweglich ist - zumindest innerhalb definierter Grenzen. Eine Fixierung des Energiespeichers kann aber vorzugsweise zumindest entlang des ersten Translationsfreiheitsgrades erfolgen, beispielsweise durch einen Batterieaufnahmebehälterdeckel, der den Energiespeicher in Richtung des elastischen Elements drückt und das elastische Element dadurch in einer gewissen elastischen Spannung hält, solange die Steckverbindung und der Batterieaufnahmebehälterdeckel geschlossen sind.

Merkmale, die im Zusammenhang mit einem der Gegenstände der Erfindung, namentlich gegeben durch die erfindungsgemäße Steckverbinderanordnung und die Batterieanordnung, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft im Rahmen des erfinderischen Gesamtkonzepts auch eine von Anspruch 1 unabhängige, selbstpositionierende Steckverbinderanordnung, aufweisend einen elektrischen Steckverbinder, der entlang eines ersten Translationsfreiheitsgrades (bzw. einer "Steckrichtung") mit einem korrespondierenden Gegensteckverbinder elektrisch und mechanisch verbindbar ist, eine Gehäusekomponente und wenigstens ein elastisches Element, das den Steckverbinder mittelbar oder unmittelbar mit der Gehäusekomponente verbindet, wobei das elastische Element derart zwischen dem Steckverbinder und der Gehäusekomponente angeordnet ist, dass ein primärer elastischer Arbeitsweg des elastischen Elements im Wesentlichen entlang des ersten Translationsfreiheitsgrades verläuft, wobei das elastische Element eine elastische Rückstellkraft auf den Steckverbinder aufbringt, um den Steckverbinder in einem ungesteckten Zustand in eine definierte räumliche Ausgangslage zu verbringen. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser selbstpositionierenden Steckverbinderanordnung und die Anmelderin behält sich vor, die in diesem Absatz beschriebene Steckverbinderanordnung separat von der in Anspruch 1 genannten Steckverbinderanordnung zu beanspruchen, wahlweise in Kombination mit den vorstehend genannten Ausführungsformen und Varianten.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine Steckverbinderanordnung gemäß einem minimalistischen, ersten Ausführungsbeispiel der Erfindung;
- Figur 2: eine Steckverbinderanordnung gemäß einem zweiten Ausführungsbeispiel der Erfindung in einer perspektivischen Ansicht;
- Figur 3: die Steckverbinderanordnung der Figur 2 in einer weiteren perspektivischen Ansicht;
- Figur 4: eine erfindungsgemäße Batterieanordnung mit einer Steckverbinderanordnung gemäß einem dritten Ausführungsbeispiel der Erfindung, in einer seitlichen Schnittdarstellung in einem nicht gesteckten Zustand;
- Figur 5: die Batterieanordnung der Figur 4 in einer Schnittdarstellung entlang der in Figur 4 dargestellten Schnittlinie V-V.
- Figur 6: den Ausschnitt VI von Figur 5 in vergrößerter Darstellung;
- Figur 7: die Batterieanordnung der Figur 4 in einer Schnittdarstellung entlang der in Figur 5 dargestellten Schnittlinie VII-VII;
- Figur 8: den Ausschnitt VIII von Figur 7 in vergrößerter Darstellung;
- Figur 9: den Ausschnitt IX von Figur 7 in vergrößerter Darstellung;
- Figur 10: die Batterieanordnung der Figur 4 in einem gesteckten Zustand der Steckverbindung;
- Figur 11: den Ausschnitt XI von Figur 10 in vergrößerter Darstellung;
- Figur 12: eine erfindungsgemäße Batterieanordnung mit einer Steckverbinderanordnung gemäß einem vierten Ausführungsbeispiel der Erfindung in einer seitlichen Schnittdarstellung in einem nicht gesteckten Zustand;
- Figur 13: die Batterieanordnung der Figur 12 in einer Schnittdarstellung entlang der in Figur 12 dargestellten Schnittlinie XIII-XIII; und

- Figur 14: eine Steckverbinderanordnung gemäß einem weiteren Ausführungsbeispiel der Erfindung.

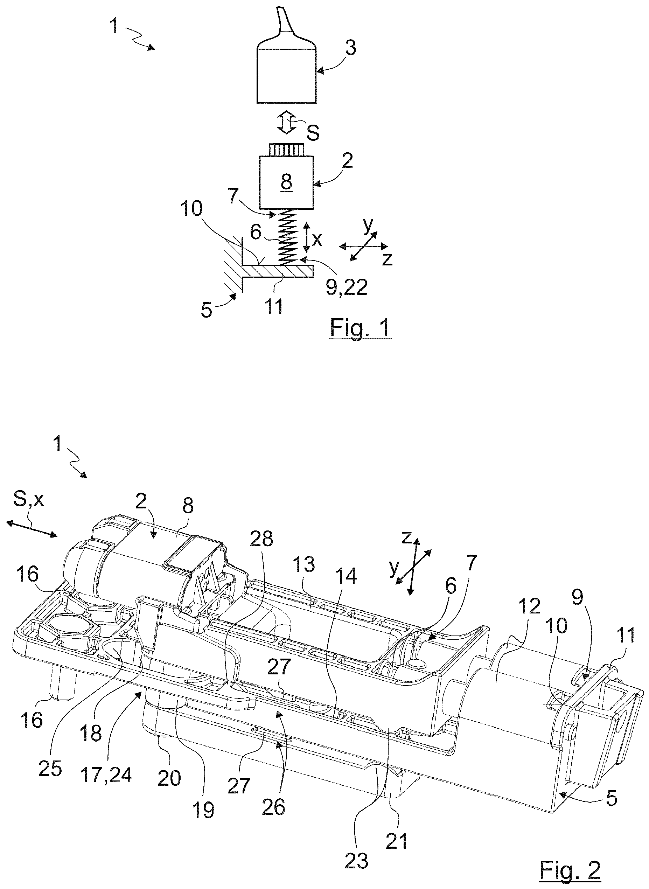

Figur 1 zeigt ein stark schematisiertes, minimalistisches Ausführungsbeispiel der vorliegenden Erfindung. Dargestellt ist eine Steckverbinderanordnung 1, die einen elektrischen Steckverbinder 2 aufweist, der entlang einer Steckrichtung S mit einem korrespondierenden Gegensteckverbinder 3 elektrisch und mechanisch verbindbar ist. Die Steckrichtung S verläuft entlang eines ersten Translationsfreiheitsgrades x.

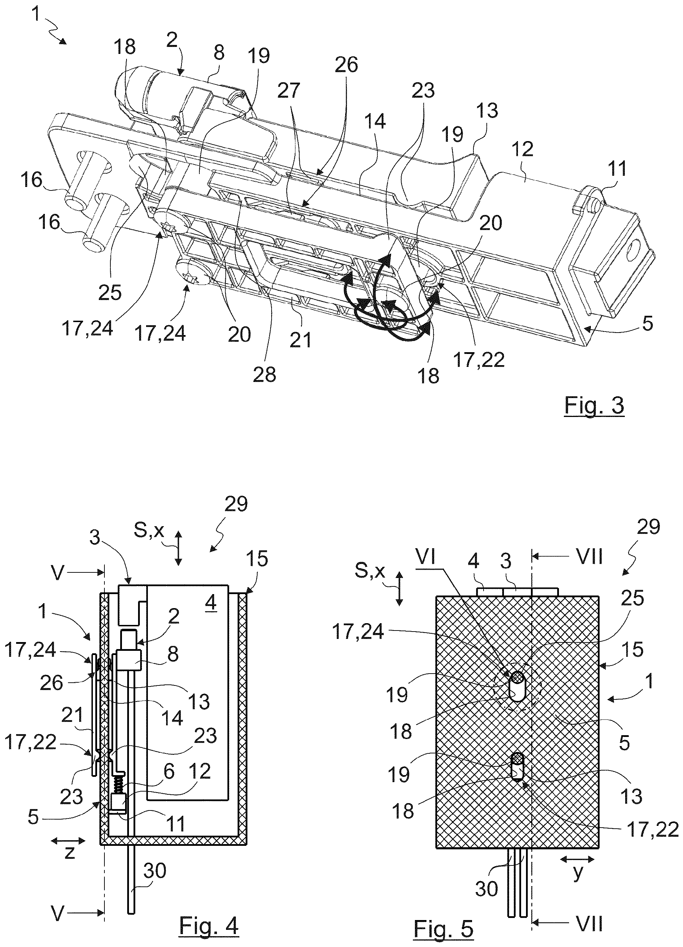

Die Erfindung eignet sich grundsätzlich für die Verwendung mit beliebigen Steckverbindern 2 und Gegensteckverbindern 3, weshalb die nachfolgenden Ausführungsbeispiele diesbezüglich nicht einschränkend zu verstehen sind. Ganz besonders eignet sich die Erfindung allerdings zur Verwendung mit Steckverbindern 2, die als Kuppler und zur Verbindung mit einem Gegensteckverbinder 3 (insbesondere mit einer Stiftwanne) eines elektrischen Energiespeichers 4 (vgl. beispielsweise Figur 4) verbindbar sind.

Die Steckverbinderanordnung 1 weist eine Gehäusekomponente 5 auf sowie ein elastisches Element 6, das den Steckverbinder 2 mittelbar oder unmittelbar mit der Gehäusekomponente 5 verbindet. Das elastische Element 6 ist derart zwischen dem Steckverbinder 2 und der Gehäusekomponente 5 angeordnet, dass der primäre elastische Arbeitsweg des elastischen Elements 6 im Wesentlichen entlang des ersten Translationsfreiheitsgrades x bzw. in Steckrichtung S verläuft. Insofern mehrere elastische Elemente 6 vorgesehen sind, sind diese vorzugsweise alle entlang des ersten Translationsfreiheitsgrades x bzw. parallel zueinander ausgerichtet. Das wenigstens eine elastische Element 6 ermöglicht eine Bewegung des Steckverbinders 2 entlang des ersten Translationsfreiheitsgrades x bzw. entlang der Steckrichtung S und/oder entlang einem der beiden nachfolgend noch genannten Translationsfreiheitsgrade y, z quer zu der Steckrichtung S.

In Figur 1 ist das elastische Element 6 stark schematisiert als Torsionsfeder bzw. Blattfeder dargestellt und verbindet Gehäusekomponente 5 und Steckverbinder 2 unmittelbar. Hierzu ist das elastische Element 6 mit einem steckerseitigen Endabschnitt 7 an einem Steckverbindergehäuse 8 des Steckverbinders 2 einerseits und mit einem gehäuseseitigen Endabschnitt 9 an einer Stützfläche 10 eines Stützabschnitts 11 der Gehäusekomponente 5 andererseits befestigt.

Auf die dargestellte Weise ist das elastische Element 6 in seiner Anordnung zwischen dem Steckverbinder 2 und der Gehäusekomponente 5 entlang eines zweiten Translationsfreiheitsgrades y und/oder entlang eines dritten Translationsfreiheitsgrades z, jeweils orthogonal zu dem ersten Translationsfreiheitsgrad x beweglich. In Figur 1 wird hierfür auf eine Führung entlang des zweiten Translationsfreiheitsgrades y und des dritten Translationsfreiheitsgrades z vollständig verzichtet. Das elastische Element 6 vermag daher eine Kippbewegung auszuführen, was eine Translation des Steckverbinders 2 entlang einem der besagten Translationsfreiheitsgrade y, z bewirkt. Ein Ausgleich in Steckrichtung S kann außerdem vorteilhaft entlang des ersten Translationsfreiheitsgrades x erfolgen.

Wie bereits erwähnt, ist das in Figur 1 dargestellte Ausführungsbeispiel minimalistisch und stark schematisiert zu verstehen. In der Regel ist es vorteilhaft, auch entlang des zweiten Translationsfreiheitsgrades y und/oder entlang des dritten Translationsfreiheitsgrades z zumindest eine gewisse Grobführung bereitzustellen, um eine stabilere Anordnung zu erhalten. Insbesondere die in den nachfolgenden Figuren 2 bis 13 dargestellten Ausführungsbeispiele sind diesbezüglich optimiert.

Ein zweites Ausführungsbeispiel der Erfindung ist anhand der Figuren 2 bis 3 perspektivisch gezeigt. Der korrespondierende Gegensteckverbinder 3 ist in den Figuren 2 und 3 nicht dargestellt.

Wiederum weist die Steckverbinderanordnung 1 einen elektrischen Steckverbinder 2 mit einem Steckverbindergehäuse 8 auf. Zwischen dem Steckverbinder 2 und der Gehäusekomponente 5 verlaufen zwei elastische Elemente 6, die beispielhaft wiederum als Torsionsfedern ausgebildet sind. Die elastischen Elemente 6 sind parallel zueinander und jeweils entlang des ersten Translationsfreiheitsgrades x ausgerichtet. Die elastischen Elemente sind entlang ihrer Längsachse teilweise gelagert oder grob geführt und mit ihren jeweiligen gehäuseseitigen Endabschnitten 9 an einem gemeinsamen Stützabschnitt 11 der Gehäusekomponente 5 abgestützt. Im Bereich des Stützabschnittes 11 sind die elastischen Elemente 6 mit radialem Spiel durch jeweilige Führungshülsen 12 geführt.

In den Ausführungsbeispielen der Figuren 2 bis 14 verbinden die elastischen Elemente 6 den Steckverbinder 2 und die Gehäusekomponente 5 mittelbar unter Verwendung eines an dem Steckverbinder 2 befestigten Verlängerungselements 13, an dem der steckerseitige Endabschnitt 7 der elastischen Elemente 6 befestigt ist.

Auch in den Ausführungsbeispielen der Figuren 2 bis 14 weist die Gehäusekomponente 5 jeweils einen Stützabschnitt 11 mit einer Stützfläche 10 auf. Quer, insbesondere orthogonal, zu der Stützfläche 10 verläuft ein Führungsabschnitt 14. Der Führungsabschnitt 14 verläuft parallel zu dem ersten Translationsfreiheitsgrad x und vermag das Verlängerungselement 13 zu führen oder zumindest abzustützen.

Die Gehäusekomponente 5 kann ein Wandungsteil eines Batterieaufnahmebehälters 15 sein (vgl. Figuren 4 bis 13) oder mit einem Wandungsteil eines Batterieaufnahmebehälters 15 verbindbar sein, beispielsweise über die in den Figuren 2 und 3 dargestellten Befestigungsmittel 16.

Die in den Figuren 2 und 3 dargestellte Steckverbinderanordnung 1 weist drei Lageranordnungen 17 zur Begrenzung der Beweglichkeit des Steckverbinders 2 entlang des ersten Translationsfreiheitsgrades x und außerdem zur Begrenzung der Beweglichkeit der elastischen Elemente 6 entlang des zweiten Translationsfreiheitsgrades y und entlang des dritten Translationsfreiheitsgrades z auf. Die Lageranordnungen 17 weisen jeweils eine entlang des ersten Translationsfreiheitsgrades x ausgerichtete Lagerausnehmung 18 in der Ausgestaltung als Langloch auf, sowie jeweilige Lagererhebungen 19 in der Form von Führungsbolzen, die in der Lagerausnehmung 18 bzw. in dem Langloch aufgenommen und gelagert sind. Die Lagererhebungen 19 bzw. Führungsbolzen sind über das Verlängerungselement 13 mit dem Steckverbindergehäuse 8 starr verbunden. Dabei ist zwischen Lagerausnehmung 18 und Lagererhebung 19 jeweils ein definiertes mechanisches Spiel in Richtung des ersten Translationsfreiheitsgrades x durch die längliche Geometrie des Langlochs 18, und entlang des zweiten Translationsfreiheitsgrades y, aufgrund der dargestellten radialen Übergröße des Langlochs 18 gegenüber der Lagererhebung 19 bzw. dem Führungsbolzen gegeben.

Die Lagererhebungen 19 bzw. Führungsbolzen erstrecken sich durch die jeweilige Lagerausnehmung 18 bzw. durch das jeweilige Langloch vollständig hindurch und ragen auf der anderen Seite aus der Gehäusekomponente 5 heraus. Die Lagererhebungen 19 bzw. Führungsbolzen sind über Befestigungselemente 20 (beispielhaft sind Flanschschrauben gezeigt) mit einer gemeinsamen Befestigungsplatte 21 verbunden, wodurch eine verliersichere Anordnung bereitgestellt werden kann. Die Höhe der Lagererhebungen 19 bzw. die axiale Länge der Führungsbolzen ist so bemessen, dass sich bei der Durchführung durch die jeweilige Lagerausnehmung 18 ein definiertes axiales Spiel entlang des dritten Translationsfreiheitsgrades z ergibt.

Aufgrund des durch die Lageranordnungen 17 bereitgestellten mechanischen Spiels vermag der Steckverbinder 2 eine Ausgleichsbewegung durchzuführen und beispielsweise der Bewegung einer über einen Gegensteckverbinder 3 mit dem Steckverbinder verbundenen elektrischen Einrichtung (z. B. dem in den nachfolgenden Figuren angedeuteten Energiespeicher 4) zu folgen.

Diese Ausgleichsbewegung kann einerseits entlang des ersten Translationsfreiheitsgrades x (vorliegend also in Längsrichtung der Langlöcher 18) und in den beiden weiteren Translationsfreiheitsgraden y, z aufgrund der Möglichkeit des Verkippens des Verlängerungselements 13 bzw. der elastischen Elemente 6 ermöglicht werden. Damit sich besagte Verkippung vorteilhaft ermöglichen lässt, kann wenigstens ein Drehzentrum 22 (vgl. Figur 3) vorgesehen sein, um das der Steckverbinder 2 verkippbar ist, um die Bewegung entlang des zweiten Translationsfreiheitsgrades y und/oder entlang des dritten Translationsfreiheitsgrades z zu ermöglichen. Das Drehzentrum 22 kann insbesondere durch die "hinterste" Lageranordnung 17 gebildet werden, die dem Stützabschnitt 11 am nächsten ist. Vorzugsweise wird das Drehzentrum 22 möglichst angrenzend oder zumindest benachbart an das von dem Steckverbinder 2 abgewandten Ende des Verlängerungselements 7 angeordnet. Die durch die hintere Lageranordnung 17 bereitgestellten drei Kippfreiheitsgrade sind in Figur 3 durch entsprechende Pfeile angedeutet.

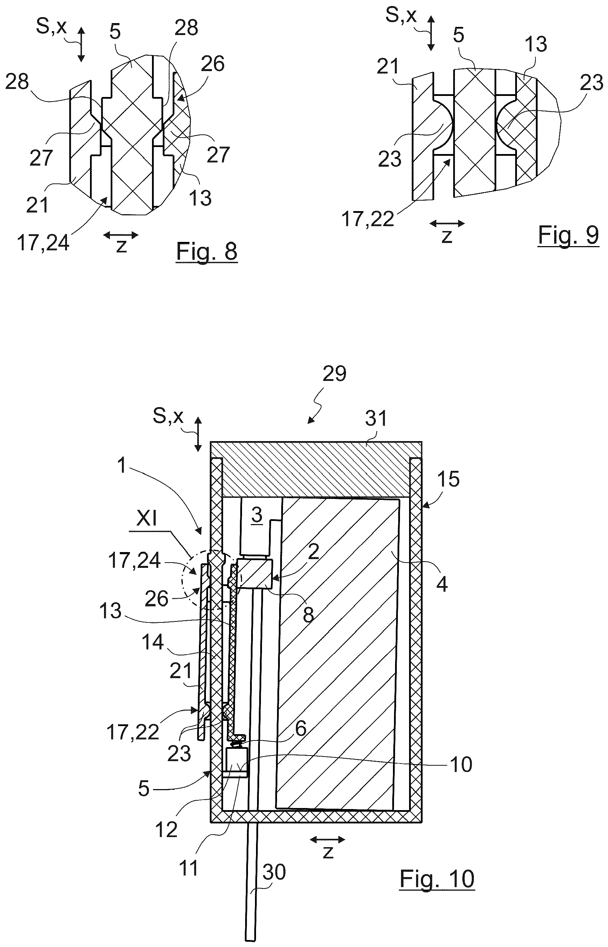

Beispielsweise hinsichtlich des dritten Translationsfreiheitsgrades z können im Bereich des Drehzentrums 22 geeignete Auswölbungen 23 des Verlängerungselements 13 (gegebenenfalls aber auch des Steckverbinders 2 oder der elastischen Elemente 6 selbst) und/oder der optionalen Befestigungsplatte 21 vorgesehen sein, um eine Abstützmöglichkeit bereitzustellen und die Bewegung mechanisch zu stabilisieren (vgl. insbesondere Figur 3 und Figur 9).

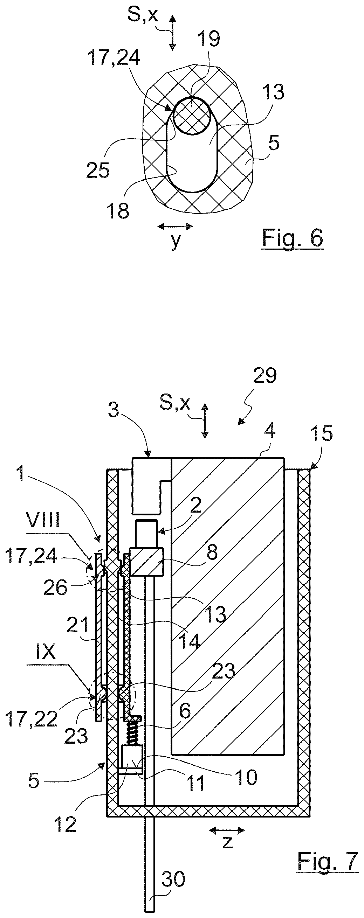

Um das Zusammenfinden des Steckverbinders 2 und des Gegensteckverbinders 3 insbesondere im Falle eines blinden Steckvorganges zu erleichtern, kann vorgesehen sein, dass das elastische Element 6 eine elastische Rückstellkraft auf den Steckverbinder 2 aufbringt, wodurch der Steckverbinder 2 in einem ungesteckten Zustand in eine definierte räumliche Ausgangslage verbracht wird. Hierzu kann wenigstens eine erste Positionieranordnung 24 vorgesehen sein, die im Ausführungsbeispiel der Figuren 2 und 3 durch die beiden "vorderen" Lageranordnungen 17 (also die Lageranordnungen 17, die dem Steckverbinder 2 am nächsten sind) gebildet wird. Durch die Rückstellkraft der elastischen Elemente 6 wird der jeweilige vordere Führungsbolzen 19 in einen querschnittsverringerten Abschnitt 25 der Lagerausnehmung 18 gedrückt (vgl. auch Figur 6). Grundsätzlich kann dies über eine beliebige erste Positionierungsanordnung 24 erfolgen - insbesondere bei Verwendung mehrerer entlang des ersten Translationsfreiheitsgrades x hintereinander angeordneten Lageranordnungen 17 muss die erste Positionierungsanordnung 24 auch nicht unbedingt durch die vordere Lageranordnung 17 gebildet sein.

Außerdem sei vorsorglich an dieser Stelle nochmals erwähnt, dass alternativ oder ergänzend zu einem "drückenden" elastischen Elements 6 auch ein "ziehendes" elastisches Element 6 vorgesehen sein kann um den Steckverbinder 6 mit einer Rückstellkraft in Steckrichtung S bzw. in Richtung auf den Gegensteckverbinder 3 zu beaufschlagen.

Ergänzend kann eine zweite Positionieranordnung 26 aus einem rampenförmigen ersten Stützelement 27 einerseits und einem zweiten Stützelement 28 für das erste Stützelement 27 andererseits vorgesehen sein, um die Bewegung des Steckverbinders 2 entlang des dritten Translationsfreiheitsgrades z zu begrenzen bzw. zu stabilisieren und um eine automatische Positionierfunktion für den dritten Translationsfreiheitsgrad z bereitzustellen, wenn sich der Steckverbinder 2 in seinem nicht gesteckten Grundzustand befindet. In den Ausführungsbeispielen der Figuren 2 bis 13 weist das Verlängerungselement 13 zwei parallel verlaufende, rampenförmige erste Stützelemente 27 auf, die mit zweiten Stützelementen 28 der Gehäusekomponente 5 (entlang ihres Führungsabschnitts 14) korrespondieren. Die zweiten Stützelemente 28 sind dabei am Ende einer in der Gehäusekomponente 5 gebildeten, rampenförmigen Vertiefung angeordnet. Auf dieselbe Weise erfolgt eine Grobführung zwischen der Befestigungsplatte 21 und der Gehäusekomponente 5.

In den Darstellungen der Figuren 2 und 3 sind die elastischen Elemente 6 beispielhaft komprimiert dargestellt, so wie dies bei einer gesteckten Steckverbindung der Fall wäre. Daher stützen sich in den Figuren 2 und 3 die rampenförmigen ersten Stützelemente 27 nicht auf den zweiten Stützelement 28 ab und es ergibt sich ein definiertes Spiel für eine Ausgleichsbewegung entlang des dritten Translationsfreiheitsgrades z. Wird der Steckverbinder 2 entlang des ersten Translationsfreiheitsgrades x aufgrund der elastischen Rückstellkraft der elastischen Elemente 6 im nicht gesteckten Zustand hingegen nach vorne (also in Richtung auf den Gegensteckverbinder 3) verschoben, wird das rampenförmige erste Stützelement 27 in seine Abstützposition auf dem zweiten Stützelement 28 verbracht.

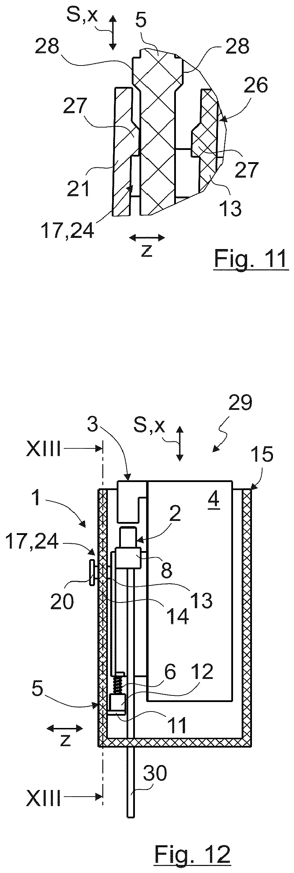

Das Prinzip ist insbesondere auch sehr gut bei einem Vergleich der Figuren 7/8 und 10/11 erkennbar. Figur 7 zeigt dabei den nicht gesteckten, gestützten Zustand (Figur 8 zeigt eine vergrößerte Darstellung der zweiten Positionieranordnung 26) und die Figuren 10 und 11 entsprechend den gesteckten, ausgleichsfähigen Zustand.

In den Figuren 4 bis 9 ist eine erfindungsgemäße Steckverbinderanordnung 1 gemäß einem dritten Ausführungsbeispiel angedeutet. Die Figuren zeigen außerdem auch eine Batterieanordnung 29, in der die Steckverbinderanordnung 1 vorteilhaft verwendet werden kann, um einen elektrischen Energiespeicher 4, wie eine Batterie, über deren "Gegensteckverbinder" 3 innerhalb eines Batterieaufnahmebehälters 15 zu kontaktieren. Bei dem Steckverbinder 2 handelt es sich beispielhaft um einen Kabelsteckverbinder, dessen Kabel 30 oder Leitungen aus dem Batterieaufnahmebehälter 15 herausgeführt werden. Das mechanische Spiel des Energiespeichers 4 innerhalb des Batterieaufnahmebehälters 15 ist in den Figuren 4 bis 13 zur besseren Verdeutlichung des Prinzips übertrieben dargestellt.

Die Ausführungsbeispiele der Figuren 4 bis 14 sind grundsätzlich ähnlich zu den bereits beschriebenen Varianten, weshalb nachfolgend im Wesentlichen auf die Unterschiede zwischen den einzelnen Ausführungsbeispielen eingegangen wird.

Die Figuren 4 bis 9 zeigen die Steckverbinderanordnung 1 jeweils in einem nicht gesteckten Zustand der Steckverbindung und daher in dem selbstständig positionierten, definierten Ruhezustand. In den Figuren 10 und 11 ist hingegen der gesteckte Zustand dargestellt, wobei der Energiespeicher 4 beispielhaft entlang des dritten Translationsfreiheitsgrades z verkippt dargestellt ist. In diesem Zustand kann vorgesehen sein, dass der Batterieaufnahmebehälter 15 durch einen Batterieaufnahmebehälterdeckel 31 verschlossen ist (vgl. Figur 10), wodurch der Energiespeicher 4 entgegen der Rückstellkraft des elastischen Elements 6 verschoben und auf diese Weise in dem Batterieaufnahmebehälter 15 verspannt wird. Durch diese Verspannung wird der Energiespeicher 4 zusätzlich gestützt.

In dem dargestellten Ausführungsbeispiel sind zwei Lageranordnungen 17 vorgesehen, die entlang des ersten Translationsfreiheitsgrades x hintereinander angeordnet sind. Die vordere Lageranordnung 17 dient gleichzeitig als erste Positionieranordnung 24 und die hintere Lageranordnung 17 als Drehzentrum 22. Es sind jeweils ein Langloch 18 und ein in dem Langloch 18 aufgenommener Führungsbolzen 19 des Verlängerungselements 13 vorgesehen.

Wie sich insbesondere gut anhand der Figuren 5 und 6 erkennen lässt, erfolgt eine Selbstpositionierung und Ausrichtung des Steckverbinders 2 in dessen ungestecktem Grundzustand aufgrund der elastischen Rückstellkraft des elastischen Elements 6, indem der Führungsbolzen 19 in der Lagerausnehmung 18 bzw. in dem Langloch 18 entlang des ersten Translationsfreiheitsgrades x nach vorne bis in einen verjüngten, querschnittsverringerten Abschnitt 25 gedrückt wird. Auf diese Weise ist der Steckverbinder 2 mit einfachen Mitteln entlang des ersten Translationsfreiheitsgrades x und auch entlang des zweiten Translationsfreiheitsgrades y positioniert und/oder zentriert.

Gleichzeitig erfolgt eine automatische Positionierung entlang des dritten Translationsfreiheitsgrades z durch eine zweite Positionieranordnung 26, wie dies bereits vorstehend beschrieben wurde (vgl. die Figuren 7/8 und 10/11). Wie auch bei dem vorhergehenden Ausführungsbeispiel werden in dem nach vorne geschobenen Zustand des Steckverbinders 2 jeweilige rampenförmige erste Stützelemente 27 des Verlängerungselements 13 und der Befestigungsplatte 21 mit entsprechenden zweiten Stützelementen 28 der Gehäusekomponente 5 in Kontakt gebracht, wodurch die definierte Positionierung in dem dritten Translationsfreiheitsgrad z erfolgt. Wird hingegen der Steckverbinder 2 samt Verlängerungselement 13 aufgrund des Steckvorgangs entgegen des Arbeitsweges des elastischen Elements 6 nach hinten verschoben, wird eine Ausgleichsbewegung möglich, da die rampenförmigen ersten Stützelemente 27 von den zweiten Stützelementen 28 beabstandet sind.

Um eine entsprechende Kippbewegung des elastischen Elements 6 bzw. des Verlängerungselements 13 in eine Translationsbewegung entlang des zweiten Translationsfreiheitsgrades y und/oder des dritten Translationsfreiheitsgrades z zu übersetzen, ist wiederum ein Drehzentrum 22 eingerichtet. Das Drehzentrum 22 wird durch die hintere Lageranordnung 17 realisiert.

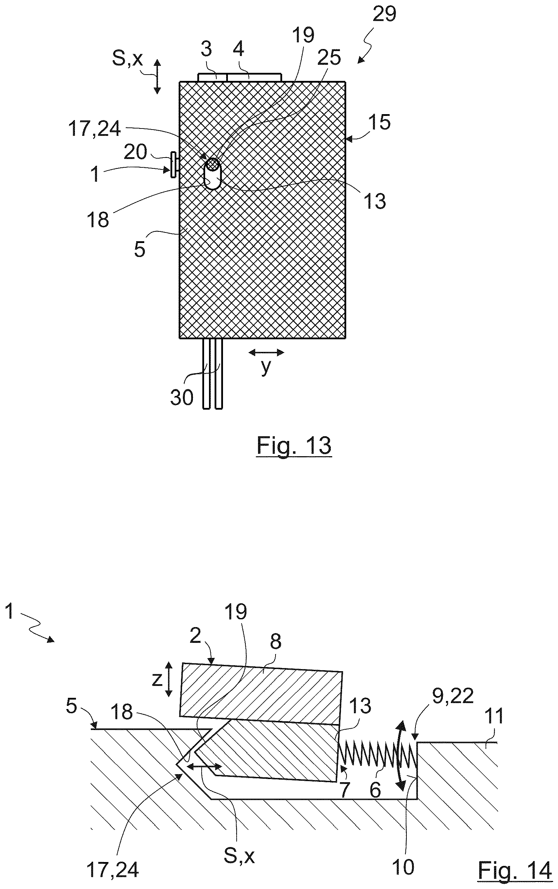

Die Figuren 12 und 13 zeigen ein viertes Ausführungsbeispiel einer erfindungsgemäßen Steckverbinderanordnung 1 bzw. Batterieanordnung 29, wobei die Steckverbindung beispielhaft in ihrem geschlossenen Zustand dargestellt ist, in dem die bereits beschriebenen Ausgleichsbewegungen möglich sind.

Die Figuren 12 und 13 sollen verdeutlichen, dass mit der vorgeschlagenen Technik auch eine Eckverbindung zwischen Steckverbinder 2 bzw. Verlängerungselement 13 und Gehäusekomponente 5 möglich sein kann. Hierzu kann an einer ersten Seite der Gehäusekomponente 5 eine erste Lageranordnung 17 und an einer orthogonal hierzu ausgerichteten, zweiten Seite der Gehäusekomponente 5 eine zweite Lageranordnung 17 vorgesehen sein. Optional können auch in diesem Fall noch weitere Lageranordnungen 17, Drehzentren 22 und/oder erste Positionieranordnungen 24 vorhanden sein, beispielsweise entlang des ersten Translationsfreiheitsgrades x versetzt.

Schließlich soll anhand von Figur 14 noch eine weitere vorteilhafte Variante einer Lageranordnung 17 vorgestellt werden, die im Rahmen der Erfindung Anwendung finden kann. Als Alternative (oder ergänzend) zu einer aus einem Langloch und einem Führungsbolzen gebildeten Lageranordnung 17 kann eine Lageranordnung 17 auch durch eine sich verjüngende Lagerausnehmung 18 gebildet werden, in die eine verjüngende Lagererhebung 19 einführbar ist. Die jeweiligen Spitzen der Lagererhebung 19 und der Lagerausnehmung 18 sind in Richtung des Gegensteckverbinders ausgerichtet. Insbesondere kann auf diese Weise gleichzeitig auch eine vorteilhafte erste Positionieranordnung 24 bereitgestellt werden.

## Patentansprüche

1. Steckverbinderanordnung (1), aufweisend einen elektrischen Steckverbinder (2), der entlang eines ersten Translationsfreiheitsgrades (x) mit einem korrespondierenden Gegensteckverbinder (3) elektrisch und mechanisch verbindbar ist, eine Gehäusekomponente (5) und wenigstens ein elastisches Element (6), das den Steckverbinder (2) mittelbar oder unmittelbar mit der Gehäusekomponente (5) verbindet und eine Bewegung des Steckverbinders (2) relativ zu der Gehäusekomponente (5) entlang des ersten Translationsfreiheitsgrades (x) und/oder entlang eines zweiten Translationsfreiheitsgrades (y) und/oder entlang eines dritten Translationsfreiheitsgrades (z) ermöglicht, **gekennzeichnet durch**
wenigstens eine schwimmende Lageranordnung (17) zur Begrenzung der Beweglichkeit des Steckverbinders (2) entlang zumindest einem der Translationsfreiheitsgrade (x, y, z), die eine Lagerausnehmung (18) und eine in der Lagerausnehmung (18) aufnehmbare Lagererhebung (19) aufweist.

2. Steckverbinderanordnung (1) nach Anspruch 1,
**dadurch gekennzeichnet, dass**
das wenigstens eine elastische Element (6), vorzugsweise alle an der mechanischen Verbindung zwischen dem Steckverbinder (2) und der Gehäusekomponente (5) funktional beteiligten elastischen Elemente (6), derart zwischen dem Steckverbinder (2) und der Gehäusekomponente (5) angeordnet ist bzw. sind, dass ein primärer elastischer Arbeitsweg des jeweiligen elastischen Elements (6) im Wesentlichen entlang des ersten Translationsfreiheitsgrades (x) wirkt.

3. Steckverbinderanordnung (1) nach Anspruch 1 oder 2,
**dadurch gekennzeichnet, dass**
das wenigstens eine elastische Element, vorzugsweise alle an der mechanischen Verbindung zwischen dem Steckverbinder (2) und der Gehäusekomponente (5) funktional beteiligten elastischen Elemente (6), entlang des zweiten Translationsfreiheitsgrades (y) und/oder entlang des dritten Translationsfreiheitsgrades (z) beweglich ist bzw. sind.

4. Steckverbinderanordnung (1) nach einem der Ansprüche 1 bis 3,
**dadurch gekennzeichnet, dass**
die Lagerausnehmung (18) in der Gehäusekomponente (5) ausgebildet ist, vorzugsweise als entlang des ersten Translationsfreiheitsgrades (x) ausgerichtetes Langloch, und wobei die Lagererhebung (19) starr mit dem Steckverbinder (2) verbunden ist.

5. Steckverbinderanordnung (1) nach einem der Ansprüche 1 bis 4,
**dadurch gekennzeichnet, dass**
eine erste Querschnittserstreckung der Lagerausnehmung (18) entlang des ersten Translationsfreiheitsgrades (x) größer ist als eine entsprechende erste Querschnittserstreckung der Lagererhebung (19) und/oder dass eine zweite Querschnittserstreckung der Lagerausnehmung (18) entlang des zweiten Translationsfreiheitsgrades (y) größer ist als eine entsprechende zweite Querschnittserstreckung der Lagererhebung (19).

6. Steckverbinderanordnung (1) nach einem der Ansprüche 1 bis 5,
**dadurch gekennzeichnet, dass**
sich die Lagererhebung (19) vollständig durch die Lagerausnehmung (18) erstreckt und auf der austretenden Seite durch wenigstens ein Befestigungselement (20) verliersicher gehalten wird, wobei die Höhe der Lagererhebung (19) größer ist als die Tiefe der Lagerausnehmung (18), um eine Ausgleichsbewegung des elastischen Elements (6) entlang des dritten Translationsfreiheitsgrades (z) zu ermöglichen.

7. Steckverbinderanordnung (1) nach einem der Ansprüche 1 bis 6,
**gekennzeichnet durch**
ein starr und unmittelbar mit dem Steckverbinder (2) verbundenes Verlängerungselement (13), an dem ein steckerseitiger Endabschnitt (7) des elastischen Elements (6) befestigt ist.

8. Steckverbinderanordnung (1) nach einem der Ansprüche 1 bis 7,
**dadurch gekennzeichnet, dass**
das elastische Element (6) als Torsionsfeder ausgebildet ist.

9. Steckverbinderanordnung (1) nach einem der Ansprüche 1 bis 8,
**gekennzeichnet durch**
wenigstens ein Drehzentrum (22), um das der Steckverbinder (2) verkippbar ist, um die Bewegung entlang des zweiten Translationsfreiheitsgrades (y) und/oder entlang des dritten Translationsfreiheitsgrades (z) zu ermöglichen.

10. Steckverbinderanordnung (1) nach Anspruch 9,
**dadurch gekennzeichnet, dass**
das Drehzentrum (22) durch eine der Lageranordnungen (17) gebildet ist.

11. Steckverbinderanordnung (1) nach einem der Ansprüche 1 bis 10,
**dadurch gekennzeichnet, dass**
das elastische Element (6) eine elastische Rückstellkraft auf den Steckverbinder (2) aufbringt, um den Steckverbinder (2) in einem ungesteckten Zustand in eine definierte räumliche Ausgangslage zu verbringen.

12. Steckverbinderanordnung (1) nach Anspruch 11,
**dadurch gekennzeichnet, dass**
wenigstens eine der Lageranordnungen (17) als erste Positionieranordnung (24) ausgebildet ist, wobei die Lagerausnehmung (18) an einem steckerseitige Ende einen querschnittsverringerten Abschnitt (25) aufweist, so dass die Lagererhebung (19) aufgrund der elastischen Rückstellkraft in den querschnittsverringerten Abschnitt gedrückt wird.

13. Steckverbinderanordnung (1) nach Anspruch 11 oder 12,
**dadurch gekennzeichnet, dass**
der Steckverbinder (2) und die Gehäusekomponente (5) eine zweite Positionieranordnung (26) aus einem ersten Stützelement (27) einerseits und einem zweiten Stützelement (28) für das erste Stützelement (27) andererseits ausbilden, wobei das zweite Stützelement (28) aufgrund der auf den Steckverbinder (2) wirkenden elastischen Rückstellkraft entlang des ersten Translationsfreiheitsgrades (x) relativ zu dem ersten Stützelement (27) verschoben wird, um eine definierte Abstützposition des Steckverbinders (2) gegenüber der Gehäusekomponente (5) zu erreichen.

14. Steckverbinderanordnung (1) nach einem der Ansprüche 1 bis 13,
**dadurch gekennzeichnet, dass**
die Gehäusekomponente (5) ein Wandungsteil eines Batterieaufnahmebehälters (15) ist oder dass die Gehäusekomponente (5) an einem Wandungsteil eines Batterieaufnahmebehälters (15) befestigbar ist.

15. Batterieanordnung (29), aufweisend eine Steckverbinderanordnung (1) gemäß einem der Ansprüche 1 bis 14 und einen elektrischen Energiespeicher (4), der den Gegensteckverbinder (3) aufweist.
